# EUROPÄISCHE PATENTSCHRIFT

(11) **EP 1 344 024 B1**
(45) Veröffentlichungstag und Bekanntmachung des Hinweises auf die Patenterteilung: **24.01.2007**
(21) Anmeldenummer: 01989411.2
(22) Anmeldetag: 17.12.2001
(51) Int. Cl.: G01D 11/28

(54) **ANZEIGEVORRICHTUNG MIT EINEM ZEIGER UND EINER LICHTQUELLE**
INDICATING DEVICE WITH A POINTER AND A LIGHT SOURCE
DISPOSITIF INDICATEUR COMPRENANT UN CURSEUR ET UNE SOURCE LUMINEUSE

(30) Priorität: 22.12.2000 DE 10064766; 31.05.2001 DE 10126712
(43) Veröffentlichungstag der Anmeldung: 17.09.2003
(73) Patentinhaber: SIEMENS AKTIENGESELLSCHAFT, 80333 München (DE)
(72) Erfinder: BURAU, Alf, 63739 Aschaffenburg (DE); NOLL, Heinrich, 64823 Gross-Umstadt (DE)
(86) Internationale Anmeldenummer: PCT/DE2001/004727
(87) Internationale Veröffentlichungsnummer: WO 2002/052229

(56) Entgegenhaltungen:
- FR-A- 2 670 287
- US-A- 5 603 283

## Beschreibung

Die Erfindung bezieht sich auf eine Anzeigevorrichtung, insbesondere für ein Kraftfahrzeug, mit einem Zeiger vor einem Zifferblatt und einer Lichtquelle, deren Licht in die Zeigerfahne des Zeigers eingekoppelt wird.

Derartige Anzeigevorrichtungen werden vor allem im Automobilbau eingesetzt. Diese müssen so konzipiert sein, dass für den Fahrer relevante Informationen auch bei Dunkelheit klar und deutlich dargestellt werden. Dies wird dadurch erreicht, dass z. B. der Zeiger einer Geschwindigkeitsanzeige derart mit einer Lichtquelle gekoppelt wird, dass dieser sich leuchtend vor dem dunklen mit leuchtenden Ziffern versehenen Zifferblatt abhebt.

Bei den bisherigen Konstruktionen gelangt ein Teil des von der Lichtquelle ausgesandten Lichtes nicht in die Zeigerfahne, sondern wird vorher als Streulicht ausgekoppelt, so dass sich um die Achse des Zeigers auf dem Zifferblatt ein Leuchthof bildet. Dieser setzt den Kontrast der Anzeige herab, so dass vielseitige Anstrengungen unternommen werden, den Lichthof zu unterdrücken.

Aus der FR 2 670 287 A (beinhaltet alle Merkmale des Oberbegriffs des Anspruchs 1) ist eine Anzeigevorrichtung, insbesondere für ein Kraftfahrzeug bekannt mit einem Zeiger und einer Lichtquelle, deren Zeiger Licht in die Zeigerfahne des Zeigers eingekoppelt wird. Hierbei liegt das Spektrum des Lichtes im nicht sichtbaren Bereich, und es sind in der Zeigerfahne Mittel vorhanden, die eine Umwandlung des nicht sichtbaren Lichtes in den sichtbaren Bereich bewirken.

Aufgabe der vorliegenden Erfindung ist es, die Ablesbarkeit der bekannten Anzeigevorrichtung zu verbessern. Diese Aufgabe wird mit den kennzeichnenden Merkmalen des Anspruchs 1 erreicht.

Dadurch, dass entweder in einem ersten Teilbereich der Zeigerfahne die eine Umwandlung des Lichtes in den sichtbaren Bereich bewegenden Mittel vorhanden sind und in einem zweiten an den ersten Teilbereich angrenzenden Teilbereich der Zeigerfahne keine solchen Mittel vorhanden sind, oder dass in der Zeigerfahne in verschiedenen Bereichen unterschiedliche Mittel vorhanden sind, die eine Umwandlung des Lichtes in jeweils verschiedenfarbige sichtbare Bereiche bewirken, kann dafür ein Ablesen des Zeigerinstrumentes wesentliche Bereich der Zeigerfahne, insbesondere der Zeigerspitze, hervorgehoben werden, entweder dadurch, dass nur dieser Bereich leuchtet oder dieser Bereich abgehoben in einer anderen Farbe leuchtet.

Im einfachsten Fall wird als Lichtquelle eine LED eingesetzt, die ultraviolettes Licht aussendet. Aufgrund der LED ist die Anzeigevorrichtung besonders langlebig und energiesparend.

Als Umwandlungsmittel wird ein lumineszierendes Material eingesetzt, dass auf dieses Licht reagiert und aufgrund der Anregung durch UV-Licht seinerseits Licht im sichtbaren Bereich aussendet. Bei dem Material kann es sich z. B. um ein fluoreszierendes oder phosphoreszierendes Material handeln. Bei einem phosphoreszierenden Material besteht weiterhin der Vorteil, dass die Zeigerfahne nachleuchtet, was für bestimmte Anwendungsfälle z. B. bei einer Zeituhr von Interesse sein kann.

Im einfachsten Fall wird das Material als Schicht auf die Unterseite der Zeigerfahne aufgebracht. Das UV-Licht strahlt vom Fuß der Zeigerfahne ein und wird wegen des flachen Einfallswinkels durch vollständige Reflexion an der Oberseite der Zeigerfahne zur Unterseite geleitet. Dort tritt es auf das lumineszierende Material, das daraufhin sichtbares Licht zur Oberseite der Zeigerfahne Sollte das Licht in die Achse des Zeigers eingekoppelt und von dort in die Zeigerfahne weitergeleitet werden, so bietet es sich an, die Achse aus einem Metallröhrchen zu bilden, an dessen Innenwänden das Licht reflektiert wird. Dadurch entfällt die Notwendigkeit, die Achse aus UV-Licht-resistentem Kunststoffmaterial herzustellen.

Die Erfindung lässt verschiedene Ausführungsformen zu. Zur weiteren Verdeutlichung ihres Grundprinzips sind zwei daVon in der Zeichnung dargestellt und werden nachfolgend beschrieben. Diese zeigt in
- Figur 1: eine erste nicht erfindungsgemäße Anzeigevorrichtung mit einem Zeiger,
- Figur 2: einen Zeiger einer erfindungsgemäßen ersten Anzeigevorrichtung und
- Figur 3: einen Zeiger einer weiteren erfindungsgemäßen Anzeigevorrichtung.

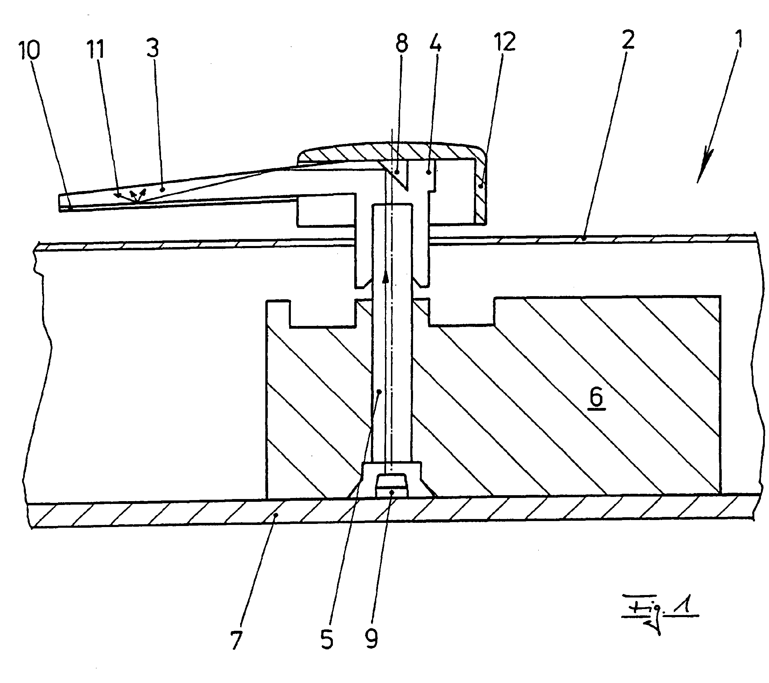

Eine Anzeigevorrichtung 1 besteht nach Figur 1 aus einem Zifferblatt 2 mit einem Zeiger, dessen Zeigerfahne 3 vor dem Zifferblatt 2 liegt. Der Kopf 4 der Zeigerfahne 3 ist mit einer Achse 5 gekoppelt. Unterhalb des Zifferblattes 2 befindet sich eine Antriebseinheit 6 auf einer Leiterplatte 7. Mittels der Antriebseinheit 6 wird der Zeiger durch Drehung der Achse 5 in die gewünschte Position gestellt. Dazu ist zwischen der Achse 5 und der Antriebseinheit 6 üblicherweise ein hier nicht dargestelltes Schneckenradgetriebe angeordnet.

Die Achse 5, der Kopf 4 des Zeigers sowie die Zeigerfahne 3 bestehen aus lichtleitendem Kunststoff und fungieren in diesem Sinne als Lichtleiter. Am unteren Ende ist aus der Leiterplatt 7 eine LED 9 angeordnet, die in die untere Stirnseite der Achse 5 UV-Licht einkoppelt. Dieses Licht strahlt in den Kopf 4 des Zeigers und wird dort durch ein sogenanntes Umlenkprisma 8 in die Zeigerfahne 3 geleitet. Dabei ist nicht zu vermeiden, dass ein Teil des Lichtes aus dem Kopf 4 nach unten austritt und in einem Hof um die Achse 5 auf das Zifferblatt 2 trifft. Bei der Verwendung von sichtbarem Licht wäre ein sogenannter Lichthof zu erkennen. Dieser bleibt aber aufgrund der Tatsache, dass Licht im nicht sichtbaren Bereich eingesetzt wird, für den Beobachter unsichtbar.

Das in die Zeigerfahne 3 geleitete Licht trifft nach einer Totalreflexion an der Oberseite der Zeigerfahne 3 auf die Unterseite, die in diesem Ausführungsbeispiel mit einer äußeren Schicht 10 aus lumineszierendem Material beschichtet ist.

Durch das Auftreffen des UV-Lichtes werden die Atome und Moleküle in der Schicht 10 angeregt und senden ihrerseits Licht im sichtbaren Bereich aus, das nach oben, wie durch die Pfeile 11 angedeutet, ausgesandt wird. Dieser Vorgang erfolgt auf der ganzen Länge der Zeigerfahne 3, so dass diese dem Beobachter des Anzeigeinstrumentes als leuchtendes Gebilde erscheint.

Um das sichtbare Licht scharf auf die Zeigerfahne 3 zu begrenzen, ist auf den Kopf 4 des Zeigers eine Kappe 12 gesetzt, die diesen Bereich abdeckt.

Wie schon weiter oben erläutert, kann die Schicht 10 auch in das Material der Zeigerfahne 3 als Dotierung eingebracht werden. Es kann auch daran gedacht werden, die ganze Zeigerfahne 3 zu dotieren. In diesem Fall empfiehlt es sich aber, an der Unterseite der Zeigerfahne 3 eine reflektierende Schicht anzubringen.

Gleiche Elemente sind in allen Figuren mit gleichen Bezugszeichen versehen.

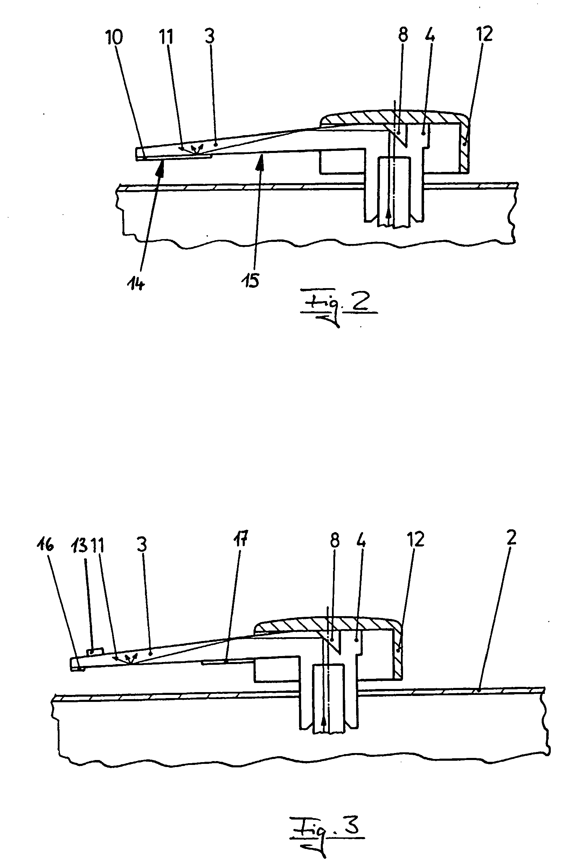

In Figur 2 ist ein Zeiger dargestellt, der sich von demjenigen nach Figur 1 dadurch unterscheidet, dass in einem die Zeigerspitze umfassenden ersten Teilbereich 14 der Zeigerfahne 3 eine Umwandlung des Lichts in den sichtbaren Bereich bewirkende Mittel vorhanden sind, nicht jedoch in einem zweiten Teilbereich 15 der Zeigerfahne 3.

Bei diesem zweiten Teilbereich 15 der Zeigerfahne 3 handelt es sich um einen der Kappe 12 zugewandten Bereich der Zeigerfahne 3. Bei einem Zeiger gemäß Figur 2 tritt nur die Zeigerspitze leuchtend hervor.

Ein weiterer Zeiger ist in Figur 3 dargestellt, wobei eine Zeigerfahne 3 in verschiedenen Bereichen unterschiedliche Mittel 13, 16, 17 aufweist, die eine Umwandlung des Lichts in jeweils verschiedenfarbige sichtbare Bereiche bewirken. Ein Mittel 16 ist an der Unterseite der Zeigerfahne 3 im Bereich der Zeigerspitze angeordnet, ein weiteres Mittel 17 ist ebenfalls an der Unterseite der Zeigerfahne 3, aber in einem einer Kappe 12 zugewandten Bereich der Zeigerfahne 3, angeordnet und ein weiteres Mittel 13 befindet sich als lichtdurchlässige Schicht an der Oberseite der Zeigerfahne 3 in einem Bereich, in dem an der Unterseite der Zeigerfahne 3 keine entsprechenden Mittel angeordnet sind. Somit kann die Zeigerspitze in einer anderen Farbe leuchten als der der Kappe 12 zugewandte Bereich der Zeigerfahne 3, und ein mittlerer Bereich der Zeigerfahne 3 kann eine weitere, dritte Farbe aufweisen.

## Patentansprüche

1. Anzeigevorrichtung, insbesondere für ein Kraftfahrzeug, mit einem Zeiger und einer Lichtquelle, deren Licht in die Zeigerfahne des Zeigers eingekoppelt wird, wobei das Spektrum des Lichtes im nicht sichtbaren Bereich liegt und in der Zeigerfahne (3) Mittel (10) vorhanden sind, die eine Umwandlung in den sichtbaren Bereich bewirken, **dadurch gekennzeichnet, dass** in einem ersten Teilbereich (14) der Zeigerfahne (3) die eine Umwandlung des Lichts in den sichtbaren Bereich bewirkenden Mittel (10) vorhanden sind und dass in einem zweiten, an den ersten Teilbereich angrenzenden Teilbereich (15) der Zeigerfahne (3) keine solchen Mittel vorhanden sind, oder dass in der Zeigerfahne (3) in verschiedenen Bereichen unterschiedliche Mittel (13, 16, 17) vorhanden sind, die eine Umwandlung des Lichtes in jeweils verschiedenfarbige sichtbare Bereiche bewirken.

2. Anzeigevorrichtung nach Anspruch 1, **dadurch gekennzeichnet, dass** es sich bei dem Licht der Lichtquelle (9) um UV-Licht handelt.

3. Anzeigevorrichtung nach Anspruch 2, **dadurch gekennzeichnet, dass** die Lichtquelle (9) eine UV-Licht emittierende LED ist.

4. Anzeigevorrichtung nach einem der vorhergehenden Ansprüche, **dadurch gekennzeichnet, dass** die Umwandlungsmittel (10) aus lumineszierendem Material bestehen.

5. Anzeigevorrichtung nach Anspruch 4, **dadurch gekennzeichnet, dass** sich das lumineszierende Material als Schicht (10) an der Unterseite der Zeigerfahne befindet.

6. Anzeigevorrichtung nach Anspruch 4, **dadurch gekennzeichnet, dass** sich das lumineszierende Material als lichtdurchlässige Schicht (13) an der Oberseite der Zeigerfahne (3) befindet.

7. Anzeigevorrichtung nach Anspruch 4, **dadurch gekennzeichnet, dass** der Zeiger (3) aus einem dunklen, aber für UV-Licht durchlässigen Material besteht.

8. Anzeigevorrichtung nach Anspruch 5 oder 6, **dadurch gekennzeichnet, dass** das lumineszierende Material in das Material der Zeigerfahne (3) eingebracht ist.

9. Anzeigevorrichtung nach einem der vorhergehenden Ansprüche, **dadurch gekennzeichnet, dass** die Zeigerfahne (3) als Teil einer transparente Scheibe dargestellt ist, dass das Licht vom Rand der Scheibe eingekoppelt wird und dass ein segmentartiger Ausschnitt der Scheibe mit dem Umwandlungsmittel versehen ist.

10. Anzeigevorrichtung nach einem der Ansprüche 1 bis 8, **dadurch gekennzeichnet, dass** die Zeigerfahne (3) am einen Ende einer Achse (5) befestigt ist, dass das Licht in das andere Ende der Achse (5) eingekoppelt wird und dass die Achse (5) aus einem Metallröhrchen besteht, an dessen Innenwänden das Licht reflektiert wird.

## Claims

1. Indicating device, in particular for a motor vehicle, having a pointer and a light source whose light is coupled into the pointer vane of the pointer, the spectrum of the light lying in the non-visible range and, in the pointer vane (3), there being means (10) which effect conversion into the visible range, **characterized in that** there are means (10) effecting conversion of the light into the visible range in a first subarea (14) of the pointer vane (3), and **in that** there are no such means in a second subarea (15) of the pointer vane (3) adjacent to the first subarea, or **in that** in different areas in the pointer vane (3) there are different means (13, 16, 17) which effect conversion of the light into respectively different coloured visible ranges.

2. Indicating device according to Claim 1, **characterized in that** the light from the light source (9) is UV light.

3. Indicating device according to Claim 2, **characterized in that** the light source (9) is an LED emitting UV light.

4. Indicating device according to one of the preceding claims, **characterized in that** the conversion means (10) consist of luminescent material.

5. Indicating device according to Claim 4, **characterized in that** the luminescent material is located as a layer (10) on the underside of the pointer vane.

6. Indicating device according to Claim 4, **characterized in that** the luminescent material is located as a translucent layer (13) on the upper side of the pointer vane (3).

7. Indicating device according to Claim 4, **characterized in that** the pointer (3) consists of a material that is dark but translucent to UV light.

8. Indicating device according to Claim 5 or 6, **characterized in that** the luminescent material is introduced into the material of the pointer vane (3).

9. Indicating device according to one of the preceding claims, **characterized in that** the pointer vane (3) is constituted as part of a transparent disc, **in that** the light is coupled in from the edge of the disc, and **in that** a segment-like portion of the disc is provided with the conversion means.

10. Indicating device according to one of Claims 1 to 8, **characterized in that** the pointer vane (3) is fixed at one end of a shaft (5), **in that** the light is coupled into the other end of the shaft (5) and **in that** the shaft (5) consists of a metal tube at whose inner walls the light is reflected.

## Revendications

1. Dispositif indicateur, destiné, notamment, à un véhicule automobile et comportant une aiguille et une source lumineuse dont la lumière est couplée dans la palette de l'aiguille, le spectre de la lumière se trouvant dans la plage de lumière invisible et des moyens (10), qui procèdent à une transformation dans la plage de lumière visible, se trouvant dans la palette (3) de l'aiguille, **caractérisé par le fait que**, dans une première partie (14) de la palette (3) de l'aiguille, il y a les moyens (10) procédant à une transformation de la lumière dans la plage de lumière visible et que, dans une deuxième partie (15) de la palette (3) de l'aiguille, adjacente à la première partie, il n'y a pas de tels moyens, ou qu'il y a, dans différentes parties dans la palette (3) de l'aiguille, divers moyens (13, 16, 17), qui procèdent chacun à une transformation de la lumière dans des plages de lumière visible de différentes couleurs.

2. Dispositif indicateur selon la revendication 1, **caractérisé par le fait que** la lumière de la source lumineuse (9) est de la lumière ultraviolette.

3. Dispositif indicateur selon la revendication 2, **caractérisé par le fait que** la source lumineuse (9) est une diode électroluminescente émettant de la lumière ultraviolette.

4. Dispositif indicateur selon l'une des revendications précédentes, **caractérisé par le fait que** les moyens de transformation (10) se composent de matière luminescente.

5. Dispositif indicateur selon la revendication 4, **caractérisé par le fait que** la matière luminescente se trouve en tant que couche (10) sur la face inférieure de la palette de l'aiguille.

6. Dispositif indicateur selon la revendication 4, **caractérisé par le fait que** la matière luminescente se trouve en tant que couche transparente (13) sur la face supérieure de la palette (3) de l'aiguille.

7. Dispositif indicateur selon la revendication 4, **caractérisé par le fait que** l'aiguille (3) se compose d'une matière sombre, mais transparente pour la lumière ultraviolette.

8. Dispositif indicateur selon la revendication 5 ou 6, **caractérisé par le fait que** la matière luminescente est intégrée dans la matière de la palette (3) de l'aiguille.

9. Dispositif indicateur selon l'une des revendications précédentes, **caractérisé par le fait que** la palette (3) de l'aiguille est représentée comme partie d'un disque transparent, que la lumière est couplée à partir du bord du disque et qu'une section du disque dans le genre d'un segment est dotée du moyen de transformation.

10. Dispositif indicateur selon l'une des revendications 1 à 8, **caractérisé par le fait que** la palette (3) de l'aiguille est fixée à l'extrémité d'un axe (5), que la lumière est couplée dans l'autre extrémité de l'axe (5) et que l'axe (5) se compose d'un petit tube métallique sur les parois intérieures duquel la lumière est réfléchie.
